# EUROPEAN PATENT SPECIFICATION

(11) **EP 4 247 636 B1**
(45) Date of publication and mention of the grant of the patent: **15.10.2025**
(21) Application number: 20961946.9
(22) Date of filing: 19.11.2020
(51) Int. Cl.: B32B 27/08, B32B 15/08, C08L 23/12, C08L 51/06, B32B 27/30, B32B 27/32, C08J 7/048

(54) **MULTILAYER STRUCTURES, LAMINATES, AND ARTICLES WITH METAL LAYERS**
MEHRSCHICHTIGE STRUKTUREN, LAMINATE UND ARTIKEL MIT METALLSCHICHTEN
STRUCTURES MULTICOUCHES, STRATIFIÉS ET ARTICLES DOTÉS DE COUCHES MÉTALLIQUES

(43) Date of publication of application: 27.09.2023
(73) Proprietor: Dow Global Technologies LLC, Midland, MI 48674 (US)
(72) Inventor: XU, Bo, Shanghai 201203 (CN); XU, Jingyi, Shanghai 201203 (CN)
(74) Representative: Boult Wade Tennant LLP
(86) International application number: PCT/CN2020/130175
(87) International publication number: WO 2022/104655

(56) References cited:
- WO-A1-2005/066266
- WO-A1-2008/054637
- WO-A1-2016/109023
- WO-A1-2016/148884
- CN-A- 1 930 234
- CN-A- 101 213 246
- CN-A- 106 280 005
- CN-A- 109 906 144
- US-A- 5 085 816
- US-A1- 2010 098 935
- US-A1- 2013 046 262
- US-A1- 2017 266 935
- US-A1- 2019 152 205

## Description

### TECHNICAL FIELD

The present invention relates to multilayer structures comprising a metal layer and a film, to laminates comprising such multilayer structures, and to articles comprising such multilayer structures or laminates.

### INTRODUCTION

WO 2005/066266 A1 provides a metallizable alkene or olefin polymer composition.

Multilayer structures that include a metallized film (i.e., a metal layer comprising a metal deposited on a layer of the film) are widely used for packaging perishable food and products. To make such structures, a thin coating of metal (e.g., aluminum) can be adhered to a film via vacuum metallization. The thin coating of metal, when added to a film layer, can improve barrier properties, and prevent or decrease liquid, gas, or vapor permeation. Problems exist, however, in maintaining the adhesion of the metal layer to the film, and the metal layer can be removed, in part or whole, resulting in inferior packaging and loss of barrier properties. For example, polypropylene films can be metallized to improve barrier properties (e.g., gas and moisture barriers). But due to polypropylene's non-polar properties, the bonding strength between the film and metal can be poor. Although polypropylene may be treated to reduce its non-polar properties, external heat or stress imposed during or after manufacturing can result in crazing due to inadequate bonding strength between the film and metal. Accordingly, there remains a need for multilayer structures including polypropylene that exhibit enhanced bonding strength between the metal layer and film.

### SUMMARY

The present invention provides multilayer structures that comprise a film and a metal layer, where the metal layer is deposited on the film. According to embodiments, the film has an outer layer comprising a blend of a maleic anhydride grafted polyethylene and a polypropylene homopolymer, and when metal is deposited on the outer layer, the resulting multilayer structure exhibits desirable properties, such as a high bonding strength between the metal and film.

In one aspect, the present invention provides a multilayer structure comprising:
(a) a film, wherein an outer layer of the film comprises a blend of (i) from 8 to 35 wt.% of a
   maleic anhydride grafted polyethylene having a density less than 0.905 g/cc; density is measured in accordance with ASTM D792; and a melt index (I₂) greater than 50.0 g/10 min; wherein melt index (I₂) is measured (with exception of propylene-based polymers) by ASTM D-1238 at 190°C at 2.16 kg and (ii) from 65 to 92 wt.% of a polypropylene homopolymer; and
(b) a metal layer comprising a metal deposited on the outer layer of the film;
wherein the term polyethylene means a polymer comprising a majority amount (>50 mol %) of units which have been derived from ethylene monomer.

In another aspect, the present invention provides a laminate. The laminate comprises a multilayer structure according to embodiments disclosed herein.

In another aspect, the present invention provides an article, such as a food package, comprising any of the inventive multilayer structures or laminates disclosed herein.

These and other embodiments are described in more detail in the Detailed Description.

### DETAILED DESCRIPTION

Aspects of the disclosed multilayer structures, laminates, and articles are described in more detail below. This disclosure, however, should not be construed to limit the embodiments set forth below.

As used herein, the term "polymer" means a polymeric compound prepared by polymerizing monomers, whether of the same or a different type. The generic term polymer thus embraces the term homopolymer (employed to refer to polymers prepared from only one type of monomer), and the term copolymer or interpolymer. Trace amounts of impurities (for example, catalyst residues) may be incorporated into and/or within the polymer. A polymer may be a single polymer, a polymer blend, or a polymer mixture, including mixtures of polymers that are formed *in situ* during polymerization.

As used herein, the terms "polypropylene" or "propylene-based polymer" shall mean polymers that contains more than 50 weight percent of polymerized propylene monomer (based on the total amount of polymerizable monomers) and, optionally, can contain at least one comonomer. A polypropylene homopolymer is a polymer that includes polymerized propylene monomer and does not include a comonomer.

As used herein, the terms "polyethylene" or "ethylene-based polymer" shall mean polymers comprising a majority amount (>50 mol %) of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); ethylene-based plastomers (POP) and ethylene-based elastomers (POE); Medium Density Polyethylene (MDPE); and High Density Polyethylene (HDPE).

As used herein, the term "multilayer structure" refers to any structure having more than one layer. For example, a multilayer structure may have two, three, four, five or more layers. A multilayer structure may be described as having the layers designated with letters. For example, a three layer structure having a core layer B, and two external layers A and C may be designated as A/B/C. Likewise, a structure having two core layers B and C and two external layers A and D would be designated A/B/C/D. Multilayer structures disclosed herein include structures comprising a film having one or more layers and a metal layer.

The term "in adhering contact" means that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

In embodiments, the present invention provides a multilayer structure that comprises (a) a film, wherein an outer layer of the film comprises a blend of (i) from 8 to 35 wt.% of a maleic anhydride grafted polyethylene having a density less than 0.905 g/cc and a melt index (I₂) greater than 50.0 g/10 min and (ii) from 65 to 92 wt.% of a polypropylene homopolymer; and (b) a metal layer comprising a metal deposited on the outer layer of the film. Without wishing to be bound by any particular theory, it is believed that the blend of a specific maleic anhydride grafted polyethylene with a relatively low density and high melt index (I₂) and a polypropylene homopolymer enhances the bonding strength between the outer layer of the film and the metal of the metal layer.

A multilayer structure of the present invention can comprise a combination of two or more embodiments described herein.

In other embodiments, the present invention relates to laminates comprising any of the inventive multilayer structures disclosed herein and a second film. The laminates according to embodiments disclosed herein comprise any of the inventive multilayer structures disclosed herein in adhering contact with a second film. The second film of the laminate is not particularly limited and can comprise polyamide, polyethylene terephthalate, polypropylene, or polyethylene.

In other embodiments, the present invention relates to an article, such as a package for perishable food or products. In embodiments, an article comprises any of the inventive multilayer structures disclosed herein. In embodiments, an article comprises any of the inventive laminates disclosed herein. An article or laminate of the present invention can comprise a combination of two or more embodiments as described herein.

### Film

Multilayer structures of the present invention comprise a film. The film of the multilayer structure includes an outer layer that enhances the adhesion strength between a metal layer (discussed below), in some embodiments, and that advantageously provides a combination of good barrier, sealing, mechanical, and optical properties in a single multilayer structure or metallized film.

The film may be a monolayer or multilayer film. In some embodiments, the film may act as a sealant film and may comprise a seleant layer which is a second outer layer opposite the outer layer that is metallized.

The outer layer of the film that is metallized comprises a blend of a maleic anhydride grafted polyethylene and a polypropylene homopolymer. In embodiments, the blend comprises from 8 to 35 wt.% of a maleic anhydride grafted polyethylene. All individual values and subranges of from 8 to 35 wt.% of a maleic anhydride grafted polyethylene are included and disclosed herein. For example, the blend can comprise from 8 to 35 wt.%, from 9 to 35 wt.%, from 10 to 35 wt.%, from 8 to 30 wt.%, from 9 to 30 wt.%, from 10 to 30 wt.%, from 8 to 20 wt.%, from 9 to 20 wt.%, from 10 to 20 wt.%, or from 12 to 18 wt.% of a maleic anhydride grafted polyethylene, where weight percent (wt.%) is based on total weight of the blend.

In embodiments, the maleic anhydride grafted polyethylene has a density less than 0.905 g/cc. All individual values and subranges of less than 0.905 g/cc are included and disclosed herein. For example, the maleic anhydride grafted polyethylene can have a density of an upper limit of 0.905 g/cc, 0.900 g/cc, 0.895 g/cc, 0.890 g/cc, 0.885 g/cc, 0.880 g/cc, 0.875 g/cc, 0.870 g/cc, or can have a density in the range of from 0.860 g/cc to 0.900 g/cc, from 0.860 to 0.890 g/cc, or from 0.860 g/cc to 0.880 g/cc.

In embodiments, the maleic anhydride grafted polyethylene has a melt index (I₂) greater than 50.0 g/10 min. All individual values and subranges of greater than 50.0 g/10 min are disclosed and included herein. For example, the maleic anhydride grafted polyethylene can have a melt index (I₂) greater than 100.0 g/10 min, greater than 200.0 g/10 min, greater than 300.0 g/10 min, greater than 400.0 g/10 min, greater than 500.0 g/10 min, or greater than 600.0 g/10 min, or can have a melt index (I₂) in the range of from 100.0 to 1000.0 g/10 min, from 200.0 to 900.0 g/10min, from 300.0 to 800.0 g/10min, from 400.0 to 700.0 g/10 min, from 500.0 to 700.0 g/10min, or from 600.0 to 700.0 g/10 min.

In embodiments, the maleic anhydride grafted polyethylene has a maleic anhydride level greater than 0.5 wt.%. All individual values and subranges of greater than 0.5 wt.% are included and disclosed herein. For example, the maleic anhydride grafted polyethylene can have a maleic anhydride level greater than 0.5 wt.%, greater than 0.8 wt.%, greater than 1.0 wt.%, greater than 1.2 wt.%, or greater than 1.4 wt.%, or can have a maleic anhydride level in the range of from 0.6 to 2.0 wt.%, from 0.8 to 2.0 wt.%, or from 1.0 to 2.0 wt.%, where weight percent (wt.%) is based on total weight of the maleic anhydride grafted polyethylene.

In embodiments, the maleic anhydride grafted polyethylene has a Brookfield Viscosity at (350°F) 177°C of from 8.0 to 18.0 Pascal-Second (Pa.S). All individual values and subranges of from 8.0 to 18.0 Pa.S are disclosed and included herein. For example, the maleic anhydride grafted polyethylene can have a Brookfield Viscosity at (350°F) 177°C of from 8.0 to 18.0 Pa.S, from 9.0 to 17.0 Pa.S, from 10.0 to 16.0 Pa.S, from 11.0 to 15.0 Pa.S, or from 12.0 to 14.0 Pa.S, where Brookfield Viscosity at (350°F) 177°C is measured in accordance with ASTM D1084.

Examples of maleic anhydride grafted polyethylenes that can be used in the outer layer in some embodiments include RETAIN^{™} maleic anhydride grafted polyethylenes, such as RETAIN^{™} 3000, commercially available from The Dow Chemical Company (Midland, MI).

In embodiments, the blend of the outer layer of the film comprises a polypropylene homopolymer. In embodiments, the blend comprises from 65 to 92 wt.% of the polypropylene homopolymer. All individual values and subranges of from 65 to 92 wt.% are disclosed and included herein. For example, the blend can comprise from 65 to 92 wt.%, 65 to 91 wt.%, 65 to 90 wt.%, from 70 to 92 wt.%, from 70 to 91 wt.%, from 70 to 90 wt.%, from 80 to 92 wt.%, 80 to 91 wt.%, from 80 to 90 wt.%, from 80 to 95 wt.%, or from 82 to 88 wt.% of a polypropylene homopolymer, where weight percent (wt.%) is based on total weight of the blend.

Examples of polypropylene homopolymers that can be used in the outer layer in some embodiments include Total Polypropylene 3365 which is commercially available from Total Petrochemical USA (Houston, TX); HD601CF which is commercially available from Borealis AG (Vienna, Austria); and PP F320 which is commercially available from Sinopec Shanghai Petrochemical Company Limited (Shanghai, China).

In embodiments, the polypropylene homopolymer of the blend has a melt flow rate of less than 12.0 g/10 min. All individual values and subranges of less than 12.0 g/10 min are disclosed and included herein. For example, the polypropylene homopolymer can have a melt flow rate of less than 12.0 g/10 min, 10.0 g/10 min, 8.0 g/10 min, 6.0 g/10 min, 4.0 g/10min, or can have melt flow rate in the range of from 0.5 to 10.0 g/10 min, from 1.0 to 10.0 g/10min, from 1.0 to 6.0 g/10min, from 1.0 to 5.0 g/10 min, or from 1.0 to 4.0 g/10 min, where melt flow rate is measured according to ASTM D1238 (230°C at 2.16 kg).

In embodiments, the blend or outer layer of the film may contain one or more additives as generally known in the art. Such additives include antioxidants, such as IRGANOX 1010 and IRGAFOS 168 (commercially available from BASF), ultraviolet light absorbers, antistatic agents, pigments, dyes, nucleating agents, fillers, slip agents, fire retardants, plasticizers, processing aids, lubricants, stabilizers, smoke inhibitors, viscosity control agents, surface modification agents, and anti-blocking agents.

In embodiments where the film is a multilayer film, the film can further comprise other layers typically included in multilayer films depending on the application, including, for example, a sealant layer, barrier layer, tie layer, or other layers. The film can be formed using techniques known to those of skill in the art based on the teaching herein. For example, the film can be prepared as a blown film or cast film, and layers of the film can be treated (e.g., corona or plasma treated) and/or coextruded using techniques known to those of skill in the art based on the teachings herein.

The film according to embodiments disclosed herein can have a variety of thickness, depending, for example, on the number of layers. For example, in embodiments, the film can have a thickness of from 2 to 200 microns, from 15 to 100 microns, from 20 to 80 microns, or from 25 to 75 microns. In embodiments where the film is a multilayer film, the outer layer of the film (comprising the blend described herein) can have a thickness of from 2 to 100 microns, from 5 to 75 microns, or 10 to 50 microns, or can comprise from 5 to 50%, from 10 to 40%, or from 15 to 35% of the overall film structure.

### Metal Layer

The multilayer structure further comprises a metal layer comprising a metal deposited on the outer layer (comprising the blend described herein) of the film. The metal layer can be applied to the outer layer of the film using vacuum metallization. Vacuum metallization is a well-known technique for depositing metals in which a metal source is evaporated in a vacuum environment, and the metal vapor condenses on the surface of the film to form a thin layer as the film passes through the vacuum chamber.

The metals that can be deposited on the outer layer of the film include Al, Si, Zn, Au, Ag, Cu, Ni, Cr, Ge, Se, Ti, Sn, or oxides thereof. In some embodiments, the metal layer is formed from aluminum or oxides of aluminum (e.g., Al₂O₃).

In embodiments, the metal layer has a thickness of from 10 to 60 nanometers. All individual values and subranges of from 10 to 60 nanometers are disclosed and included herein. For example, the metal layer can have a thickness of from 10 to 60 nanometers, 15 to 60 nanometers, 10 to 45 nanometers, 15 to 45 nanometers, or 15 to 40 nanometers.

### Multilayer Structures

Multilayer structures of the present invention, in some embodiments, comprise a film and a metal layer deposited thereon (as described above). The incorporation of the specific blend (i.e., the blend of the maleic anhydride grafted polyethylene having a relatively low density and high melt index (I₂) with the polypropylene homopolymer) in the outer layer of the film advantageously provides improved adhesion between the metal and the outer layer of the film which benefits the performance of the structure and the other structures (e.g., laminates) in which it may be incorporated. As noted above, the metal layer can provide good barrier properties, and the inclusion of a sealant layer in the film can permit the film to serve as a sealant film in a multilayer structure.

### Laminates

Multilayer structures of various embodiments described herein can be used to form laminates. Such laminates can be formed from any of the multilayer structures described herein.

Laminates may include the multilayer structures of various embodiments in adhering contact with one or more additional films. For example, a multilayer structure of one or more embodiments described hereinabove may be adhered to a second film. The second film may include, for example, polyethylene, polyamide, polyethylene terephthalate, polypropylene, or combinations thereof. The multilayer structure may be adhered to the second film through an adhesive layer, as known to those having ordinary skill in the art.

### Articles

Multilayer structures or laminates of the present invention can be used to form articles such as packages. Such articles can be formed from any of the multilayer structures or laminates described herein.

Examples of articles that can be formed from multilayer structures or laminates of the present invention can include flexible packages, pouches, stand-up pouches, and pre-made packages or pouches. In some embodiments, multilayer structures or articles of the present invention can be used for food packages. Examples of food that can be included in such packages include meats, cheeses, cereal, nuts, juices, sauces, and others. Such articles can be formed using techniques known to those of skill in the art based on the teachings herein and based on the particular use for the package (e.g., type of food, amount of food, etc.).

### TEST METHODS

Unless otherwise indicated herein, the following analytical methods are used in describing aspects of the present invention:

### Density

Density is measured in accordance with ASTM D792, and expressed in grams per cubic centimeter (g/cc or g/cm³).

### Melt Index (I₂) and Melt Flow Rate

Melt index (I₂) is measured (with exception of propylene-based polymers) by ASTM D-1238 at 190°C at 2.16 kg. Melt flow rate is used for propylene-based polymers and is measured in accordance with ASTM D-1238 at 230°C at 2.16 kg. The values for melt index are reported in g/10 min, which corresponds to grams eluted per 10 minutes.

### Brookfield Viscosity

Brookfield Viscosity is measured at (350°F) 177°C and in accordance with ASTM D1084. The values for Brookfield Viscosity are reported in Pascal-Second (Pa.S).

### EXAMPLES

The following examples illustrate features of the present disclosure but are not intended to limit the scope of the disclosure. The following materials are used in cast films that are part of the multilayer structure Examples.

BYNEL^{™} 50E803 ("Poly. 1"), an anhydride modified polypropylene resin commercially available from the Dow Chemical Company (Midland, MI) that has a density of 0.90 g/cc and melt flow rate of 470 g/10 min.

FUSABOND^{™} 525 ("Poly. 2"), an anhydride modified ethylene copolymer commercially available from the Dow Chemical Company (Midland, MI) that has a density of 0.88 g/cc and melt index (I₂) of 3.7 g/10 min.

RETAIN^{™} 3000 ("Poly. 3"), a maleic anhydride grafted polyethylene commercially available from the Dow Chemical Company (Midland, MI) that has a density of 0.87 g/cc; a melt index (I₂) of 660 g/10 min; a maleic anhydride level greater than 0.5 wt.%; and a Brookfield Viscosity at (350°F) 177°C of 13.0 Pascal-Second.

Total Polypropylene 3365 ("PP-1"), a polypropylene homopolymer commercially available from Total Petrochemical USA (Houston, TX) that has a density of 0.905 g/cc and melt flow rate of 3.8 g/10 min.

Total Polypropylene Z9450 ("PP-2"), a random copolymer polypropylene commercially available from Total Petrochemical USA (Houston, TX).

The above materials are used to make a number of three layer cast films using a 3 layer cast film line with three extruders. Each film is prepared using the same conditions. The specified formulations for each film are provided through three extruders (one extruder for each layer). If a layer includes multiple resins, the resins are dry blended before being loaded into the extruder. The total line speed is set at 20 m/min. The total film thickness is 50 microns with a 1/1/1 layer ratio (16.67 micron per layer). The cast line process parameters are shown in Table 1 below.

**Table 1**

| Extruder | Zone 1 | Zone 2 | Zone 3 | Die |
|---|---|---|---|---|
| A | 180°C | 220°C | 220°C | 220°C |
| B | 180°C | 220°C | 220°C | |
| C | 180°C | 220°C | 220°C | |

The composition of the layers of the cast films are reported in Table 2. As can be seen, the outer layer of Films 1-9 comprises a blend of PP-1 with either 5%, 10%, or 15% of Poly. 1, Poly. 2, or Poly. 3.

**Table 2**

| | Outer Layer | Core Layer | Second Outer Layer |
|---|---|---|---|
| Film 1 | 90% PP-1 + 10% Poly. 1 | 100% PP-1 | 100% PP-2 |
| Film 2 | 90% PP-1 + 10% Poly. 2 | 100% PP-1 | 100% PP-2 |
| Film 3 | 90% PP-1 + 10% Poly. 3 | 100% PP-1 | 100% PP-2 |
| Film 4 | 95% PP-1 + 5% Poly. 1 | 100% PP-1 | 100% PP-2 |
| Film 5 | 95% PP-1 + 5% Poly. 2 | 100% PP-1 | 100% PP-2 |
| Film 6 | 95% PP-1 + 5% Poly. 3 | 100% PP-1 | 100% PP-2 |
| Film 7 | 85% PP-1 + 15% Poly. 1 | 100% PP-1 | 100% PP-2 |
| Film 8 | 85% PP-1 + 15% Poly. 2 | 100% PP-1 | 100% PP-2 |
| Film 9 | 85% PP-1 + 15% Poly. 3 | 100% PP-1 | 100% PP-2 |
| Film 10 | 100% PP-1 | 100% PP-1 | 100% PP-2 |

After the films are prepared, they are stored at ambient conditions for over one week to allow for migration of additives to the film surface in order to simulate commercial conditions. Following storage for over a week, the films are corona treated using techniques known to those having ordinary skill in the art.

Following corona treatment, the outer layer (comprising the blend) of the Film is metallized. Metallization of the outer layer of the Film is done in a lab scale vacuum deposition chamber produced by Shenyang Vacuum Technology Institute. A Film is taped onto the substrate holder, and an aluminum wire is inserted into the container of the resistance heater (heating boat). A vacuum pump is firstly run to induce a pressure lower than 50 Pa in the chamber, with a cooling system at 15°C. The chamber evacuation set-up is changed from vacuum pump to a molecular pump by opening the cut-off valve quickly, closing the corner valve, and opening the butterfly valve. By such operation, the chamber is evacuated by the molecular pump to a much higher vacuum, while the vacuum pump is not protecting the operation of molecular pump. When the vacuum level reaches 3*10⁻³ Pa, the heating boat is turned on. A mask is adjusted to cover the substrate surface temporarily, while a spinning component is turned on to drive a constant speed spinning of the substrate to facilitate a more uniform deposition. A thickness monitor is then turned on, which is based on QCM (quartz crystal microbalance, Fil-Tech Inc.). The current on the heating boat is tuned in order to get a required aluminum deposition rate (normally 10-50 Angstrom/s), and then the mask above the substrate is quickly removed and the thickness reading on the QCM reset to zero at the same moment. The deposition continues until a thickness of around 20 nanometers is achieved. The heating boat is then turned off immediately. The molecular pump is stopped but not turned off until the speed dropped to zero. Protection from the vacuum pump also continued during this stage. After turning off the vacuum pump, the chamber is ventilated to atmosphere. The metallized Multilayer Structure is then taken out of the chamber and placed in dust-preventing boxes.

The bonding strength of the metal layer to the outer layer of the Film is then measured for each Multilayer Structure as follows. The Multilayer Structure is heat sealed to a 100 micron film made from ethylene acrylic acid copolymer having an acrylic acid content of ~7% ("the EAA film"), with the metal layer of the Multilayer Structure being in contact with the EAA film. The Multilayer Structure and the EAA film are heat sealed by placing the films between an upper jaw at 110°C and a lower jaw at 70°C, with the upper jaw being in contact with the EAA film and the lower jaw in contact with the Multilayer Structure. The jaws are in contact with the EAA film and the Multilayer Structure for 20 seconds under pressure of 5 bars. After 24 hours aging at room temperature, the bonding strength is then measured using an Instron 5567 tensile machine, by measuring T-Peel at a testing speed of 12 inches/minute with a load cell of 100 N. The average value used as the bonding strength between the outer layer of the Film and the metal layer. The results are shown in Table 3.

**Table 3**

| | Film | Bonding Strength (N/15 mm) |
|---|---|---|
| Comparative Multilayer Structure 1 | Film 1 | 0.246 |
| Comparative Multilayer Structure 2 | Film 2 | 0.374 |
| Inventive Multilayer Structure 1 | Film 3 | 0.566 |
| Comparative Multilayer Structure 3 | Film 4 | 0.310 |
| Comparative Multilayer Structure 4 | Film 5 | 0.310 |
| Comparative Multilayer Structure 5 | Film 6 | 0.286 |
| Comparative Multilayer Structure 6 | Film 7 | 0.209 |
| Comparative Multilayer Structure 7 | Film 8 | 0.615 |
| Inventive Multilayer Structure 3 | Film 9 | 1.451 |
| Comparative Multilayer Structure 8 | Film 10 | 0.352 |

As shown above, when the outer layer of the film contains a blend of 10 wt.% or 15 wt.% of a maleic anhydride grafted polyethylene with a polypropylene homopolymer (Inventive Multilayer Structure 1 and 3), the bonding strengths are significantly greater than corresponding Comparative Multilayer Structures (e.g., Comparative Multilayer Structure 1-2 and 6-7).

## Claims

1. A multilayer structure comprising:
(a) a film, wherein an outer layer of the film comprises a blend of (i) from 8 to 35 wt.% of a maleic anhydride grafted polyethylene having a density less than 0.905 g/cc;
wherein density is measured in accordance with ASTM D792; and a melt index (I₂) greater than 50.0 g/10 min; wherein melt index (I₂) is measured by ASTM D-1238 at 190°C at 2.16 kg and (ii) from 65 to 92 wt.% of a polypropylene homopolymer; and
(b) a metal layer comprising a metal deposited on the outer layer of the film;
wherein the term polyethylene means a polymer comprising a majority amount (>50 mol %) of units which have been derived from ethylene monomer.

2. The multilayer structure of claim 1, wherein the maleic anhydride grafted polyethylene has a maleic anhydride level greater than 0.5 wt.%.

3. The multilayer structure of any of the preceding claims, wherein the maleic anhydride grafted polyethylene has a Brookfield Viscosity at (350°F) 177°C of from 8.0 to 18.0 Pascal-Second; wherein the Brookfield Viscosity is measured in accordance with ASTM D 1084.

4. The multilayer structure of any of the preceding claims, wherein the metal comprises Al, Si, Zn, Au, Ag, Cu, Ni, Cr, Ge, Se, Ti, Sn, oxides thereof, and combinations thereof.

5. The multilayer structure of any of claims 1-3, wherein the metal comprises Al metal, oxides of Al, or both.

6. The multilayer structure of any of the preceding claims, wherein the metal is deposited on the film by vacuum metallization.

7. The multilayer structure of any of the preceding claims, wherein the metal layer has a thickness of from 10 to 60 nanometers.

8. A laminate comprising the multilayer structure of any of the preceding claims in adhering contact with a second film.

9. An article comprising the laminate of claim 8.

## Patentansprüche

1. Mehrschichtstruktur, umfassend:
(a) eine Folie, wobei eine Außenschicht der Folie eine Mischung aus (i) zu 8 bis 35 Gew.-% ein mit Maleinsäureanhydrid gepfropftes Polyethylen, das eine Dichte von weniger als 0,905 g/cm³ aufweist, umfasst; wobei die Dichte gemäß ASTM D792 gemessen wird; und einen Schmelzindex (I₂) von mehr als 50,0 g/10 min; wobei der Schmelzindex (I₂) gemäß ASTM D-1238 bei 190 °C bei 2,16 kg gemessen wird und (ii) zu 65 bis 92 Gew.-% ein Polypropylenhomopolymer; und
(b) eine Metallschicht, umfassend ein Metall, das auf der Außenschicht der Folie abgeschieden ist; wobei der Begriff Polyethylen ein Polymer bezeichnet, umfassend einen Mehrheitsbetrag (>50 Mol-%) aus Einheiten, die aus Ethylenmonomer abgeleitet sind.

2. Mehrschichtstruktur nach Anspruch 1, wobei das mit Maleinsäureanhydrid gepfropfte Polyethylen einen Maleinsäureanhydridgehalt von mehr als 0,5 Gew.-% aufweist.

3. Mehrschichtstruktur nach einem der vorstehenden Ansprüche, wobei das mit Maleinsäureanhydrid gepfropfte Polyethylen eine Brookfield-Viskosität bei 177 °C (350 °F) von 8,0 bis 18,0 Pascalsekunden aufweist; wobei die dynamische Viskosität gemäß ASTM D1084 gemessen wird.

4. Mehrschichtstruktur nach einem der vorstehenden Ansprüche, wobei das Metall Al, Si, Zn, Au, Ag, Cu, Ni, Cr, Ge, Se, Ti, Sn, Oxide davon und Kombinationen davon umfasst.

5. Mehrschichtstruktur nach einem der Ansprüche 1 bis 3, wobei das Metall Al-Metall, Al-Oxide oder beides umfasst.

6. Mehrschichtstruktur nach einem der vorstehenden Ansprüche, wobei das Metall auf der Folie durch Vakuummetallisierung abgeschieden wird.

7. Mehrschichtstruktur nach einem der vorstehenden Ansprüche, wobei die Metallschicht eine Dicke von 10 bis 60 Nanometer aufweist.

8. Laminat, umfassend die Mehrschichtstruktur nach einem der vorstehenden Ansprüche in haftendem Kontakt mit einer zweiten Folie.

9. Artikel, umfassend das Laminat nach Anspruch 8.

## Revendications

1. Structure multicouche comprenant :
(a) un film, dans lequel une couche externe du film comprend un mélange de (i) 8 à 35 % en poids d'un polyéthylène greffé par anhydride maléique ayant une masse volumique inférieure à 0,905 g/cm³ ; dans laquelle la masse volumique est mesurée conformément à la norme ASTM D792 ; et un indice de fusion (I₂) supérieur à 50,0 g/10 min ; dans laquelle l'indice de fusion (I₂) est mesuré par la norme ASTM D-1238 à 190 °C et à 2,16 kg et (ii) 65 à 92 % en poids d'un homopolymère de polypropylène ; et
(b) une couche métallique comprenant un métal déposé sur la couche externe du film ; dans laquelle le terme polyéthylène signifie un polymère comprenant une quantité majoritaire (> 50 % en moles) de motifs qui ont été dérivés de monomère d'éthylène.

2. Structure multicouche selon la revendication 1, dans laquelle le polyéthylène greffé par anhydride maléique a une teneur en anhydride maléique supérieure à 0,5 % en poids.

3. Structure multicouche selon l'une quelconque des revendications précédentes, dans laquelle le polyéthylène greffé par anhydride maléique a une viscosité Brookfield à (350 °F) 177 °C allant de 8,0 à 18,0 pascals-secondes ; dans laquelle la viscosité Brookfield est mesurée conformément à la norme ASTM D1084.

4. Structure multicouche selon l'une quelconque des revendications précédentes, dans laquelle le métal comprend AI, Si, Zn, Au, Ag, Cu, Ni, Cr, Ge, Se, Ti, Sn, des oxydes de ceux-ci, et des combinaisons de ceux-ci.

5. Structure multicouche selon l'une quelconque des revendications 1 à 3, dans laquelle le métal comprend de l'AI métallique, des oxydes d'AI, ou les deux.

6. Structure multicouche selon l'une quelconque des revendications précédentes, dans laquelle le métal est déposé sur le film par métallisation sous vide.

7. Structure multicouche selon l'une quelconque des revendications précédentes, dans laquelle la couche métallique a une épaisseur allant de 10 à 60 nanomètres.

8. Stratifié comprenant la structure multicouche selon l'une quelconque des revendications précédentes en contact adhérent avec un second film.

9. Article comprenant le stratifié selon la revendication 8.
